# EUROPEAN PATENT APPLICATION

(11) **EP 4 851 943 A1**
(43) Date of publication of application: **09.12.2026**
(21) Application number: 25181455.4
(22) Date of filing: 06.06.2025
(51) Int. Cl.: G06V 10/26, G06T 17/05, G06V 10/82, G06V 20/56, G06V 20/64, G06V 20/70

(54) **DETERMINING A THREE-DIMENSIONAL REPRESENTATION OF A SCENERY AIDED BY GROUND TRUTH INFORMATION**

(71) Applicant: Robert Bosch GmbH, 70442 Stuttgart (DE)
(72) Inventor: Shapiro, Yoel, 2751418 Kiryat Bialik (IL); Glaeser, Claudius, 71254 Ditzingen (DE)

(57) **Abstract**

A method (100) for determining a three-dimensional representation (3) of a scenery (1), the method (100) comprising the steps of:
• providing (110) a given set of records (2) of measurement data taken of the scenery (1);
• providing (120) an initial estimate of a set of parameters (3a) that characterize the three-dimensional representation (3);
• providing (130) a model (4) of at least one measurement system with which the given records of measurement data (2) were acquired;
• rendering (140), based on the three-dimensional representation (3), reconstructions (5) of records (2) of measurement data from perspectives corresponding to perspectives (2a) from which the given records (2) of measurement data were acquired;
• rating (150) at least the agreement of the reconstructions (5) with the given records (2) of measurement data by means of a given loss function (6); and
• optimizing (160) at least the parameters (3a) that characterize the three-dimensional representation (3) towards the goal of improving the rating (6a) by the loss function (6),
wherein the loss function (6), the model (4) of the measurement system, and/or the perspectives (2a) from which the given records (2) of measurement data were acquired are determined based at least in part on ground truth information (7*) regarding the presence of object instances, and/or occupancy of parts of spaces.

## Description

The present invention relates to the three dimensional modelling of a scenery based on records of measurement data that have been gathered from multiple perspectives.

### Background

For many applications, it is important to capture, based on measurement data gathered from multiple perspectives, a scenery in three dimensions. For example, when a vehicle or robot is to be steered through the scenery in an automated manner, the planning of future actions of the vehicle or robot needs to know which areas are safe for the vehicle or robot to move into.

Also, once a three-dimensional representation of the scenery is known, synthetic records of measurement data from arbitrary perspectives may be rendered. In particular, these synthetic records of measurement data may augment the available training data set for a machine learning model that evaluates the scenery based on records of measurement data. For example, such a machine learning model may be configured to classify the scenery based on captured images or other records of measurement data. Augmentation of the training data set with synthetic records improves the final accuracy that can be achieved after the training is completed.

The determining of the three-dimensional representation usually involves an optimization process. A set of parameters that characterize the three-dimensional representation may be optimized for maximum agreement of this representation with the known records of measurement data.

### Disclosure of the invention

The invention provides a method for determining a three-dimensional representation of a scenery. In particular, this scenery may comprise a collection of objects and/or areas with different semantic meanings in which an autonomous agent, such as a vehicle or robot, is to move.

The method starts from a given set of records of measurement data taken of the scenery. A record of measurement data is any structure or collection of data that belong together and may be outputted as the result of a measurement. Examples for records of measurement data include images that are outputted by cameras, and point clouds that assign one or more measurement values to arbitrary points in space that need not be arranged in a regular grid and need not form a contiguous area. In particular, a record of measurement data may correspond to a particular point in time.

An initial estimate of a set of parameters that characterize the three-dimensional representation is provided. In particular, this may comprise choosing an ansatz by which parameters of the three-dimensional representation are to be characterized. In one example, a Neural Radiance Field, NeRF, may be learned from multiple images taken from different views. This neural rendering has a volumetric representation, most commonly a simple 3D grid. In another example, 3D Gaussian Splatting, 3DGS, introduces a sparse representation that is much more efficient and faster to learn. The standard 3DGS parameters include location and appearance, e.g. opacity ("density") and color, of contributions of basis functions that may relate to different viewing angles and may comprise, e.g., spherical harmonics. Initializing the locations of the basis functions may, for example, be done by estimating a Point Cloud, PCD, reconstruction of the scenery, e.g., by Structure from Motion, SfM.

A model of at least one measurement system with which the given records of measurement data were acquired is provided. For example, this measurement system may comprise one or more cameras, radar sensors, and/or lidar sensors that may capture the scenery from different perspectives. In particular, these perspectives may be time-dependent if the measurement system is in motion, e.g., if it is mounted on a moving vehicle or robot. In particular, the model of the measurement system may comprise concrete perspectives from which the given records of measurement data were acquired. In one example, where a lot of images of a scenery is taken from different perspectives, the perspectives (camera poses) from which individual images were taken may be reconstructed by photogrammetry.

Based on the three-dimensional representation, reconstructions of records of measurement data from perspectives corresponding to perspectives from which the given records of measurement data were acquired are rendered. That is, given the three-dimensional representation and a perspective, it is determined what the measurement system would see from this perspective. Later on, after the representation has been learned, it may be used to render reconstructions from novel perspectives not seen in the given records of measurement data. That is, a major use case of the learned three-dimensional representation is novel view synthesis.

At least the agreement of the reconstructions with the given records of measurement data is rated by means of a given loss function. At least the parameters that characterize the three-dimensional representation are optimized towards the goal of improving the rating by the loss function.

The model of the measurement system may be part of this optimization loop as well. That is, the loss function may also measure an agreement of the reconstructions with the model of the at least one measurement system. But the model of the measurement system may just as well be optimized, e.g., in a self-consistent manner akin to the manner used in photogrammetry, namely minimizing contradictions between the set of determined camera poses on the one hand, and the actually seen images on the other hand.

In particular, if the processing chain that leads from the three-dimensional representation to the reconstructions is differentiable, the value of the loss function may be back-propagated to updates for individual parameters of the three-dimensional representation.

In the context of the presently proposed method, the loss function, the model of the measurement system, and/or the perspectives from which the given records of measurement data were acquired are determined based at least in part on ground truth information regarding the presence of object instances, and/or occupancy of parts of spaces.

The inventors have found that this kind of ground truth information can be used in a versatile manner to compensate for prediction errors and geometrically align sensor data and/or rendered reconstructions. Also, such ground truth is often readily available, e.g. in the form of road maps, other driving maps, or floor plans. That is, no additional effort is required to obtain this ground truth.

The end result of using said ground truth is that the reconstructions rendered from the three-dimensional representation become more accurate, which means that the three-dimensional representation more accurately corresponds to the true three-dimensional structure of the scenery. Also, the reconstruction is better prepared for the simulation of the behaviour of objects and traffic, and for simulation of motion in general.

In a particularly advantageous embodiment, information regarding the presence of object instances, and/or occupancy of parts of spaces, is computed based at least in part on one or more reconstructions. The so-computed information is compared to the ground truth information. The loss function is dependent on the result of this comparison. That is, the information from the reconstructions may be transported into the space where the ground truth information lives. The information from the reconstructions is typically richer than the ground truth information. Therefore, transporting it in this way will produce a lesser error than upsampling or otherwise enriching the ground truth information into the space of reconstructions and doing the comparison there. Alternatively or in combination to this, a map could be projected onto a reconstruction, so the comparison could be made in the space where the reconstruction lives as the common space.

In a further particularly advantageous embodiment, the scenery comprises a traffic situation, and the ground truth information comprises a map of roads or other pathways along which traffic participants may move. As discussed before, this kind of ground truth is readily available in large quantities. It is also easily interpretable. For example, if a road crossing is identified in a reconstruction, localization may be used to identify the closest candidates on the map and calculate a transformation that minimizes their chamfer distance or maximizes their overlap.

In one example, the ground truth information comprises a rasterized ground truth map. Based at least in part on the one or more reconstructions, information regarding the presence of object instances, and/or occupancy of parts of spaces, is computed as an actual map based on a reconstruction seen from bird's-eye view. The loss function comprises a contribution from a segmentation loss computed between the actual map and the ground truth map. A bird's-eye view is easily synthesized based on the three-dimensional representation. An exemplary optimization objective for the loss relating to the comparison with the map is the overlap of semantically matching pixels. For example, this may be measured with muti class Intersection over Union, IoU, or during training with classification losses such as Cross Entropy, CE, or DICE loss. In 3D, the alignment of two elements may be optimized with a homogeneous transformation, but in 2D, optimization of other operators would be required. If the rasterized map is considered as a 2D image, and the prediction is considered as a template, then their alignment may be optimized by translation, rotation and scaling. Typically, optimal translation is estimated with convolution or correlation, while scale and rotation may be estimated by iterative search within a reasonable search range at prescribed accuracy increments.

In a further particularly advantageous embodiment, the ground truth information comprises a vectorized ground truth map. Information regarding the presence of object instances, and/or occupancy of parts of spaces, is computed as an actual map. The loss function comprises a contribution from a Point2Point loss, and/or an edge direction loss, computed between the actual map and the ground truth map. This is easier and faster to compute than a pixel-wise semantic overlap.

As discussed before, the given records of measurement data may, in a further particularly advantageous embodiment, comprise images taken by one or more cameras. If camera images are taken from different perspectives, there will be a partial overlap of the information in the images.

In a further particularly advantageous embodiment, information regarding the presence of object instances, and/or occupancy of parts of spaces, is computed based on given records of measurement data in combination with information about the respective used camera. This information is compared to the ground truth information. Based on the result of this comparison, an update to camera poses in the model of the measurement system is calculated. In this manner, the ground truth information may be put to a second use, besides the refining of the final three-dimensional representation.

In particular, camera images (sensor data) may be combined with camera calibration parameters to yield a prediction of a map that details the presence of object instances, and/or occupancy of parts of spaces. For example, the camera calibration parameters may indicate the scale of the image, e.g., to which distance in reality a certain distance measured in the image corresponds. The scale of the image may in turn depend, e.g., on the focal length and other parameters that affect the zoom factor of the camera.

In a further particularly advantageous embodiment, at least one distribution function that assigns, to each location in three-dimensional space, a probability is chosen as a function that makes location-dependent contributions to the representation. These contributions are well motivated and easily interpretable. That is, a representation in three-dimensional space that is assembled from such contributions has a meaning of its own that may, for example, be evaluated further by a downstream task module, and in particular by a task module that directly gets the sparse representation in three-dimensional space as input.

For example, at least one probability density function of a Gaussian distribution may be chosen as a distribution function. Parameter that characterize such a function may, inter alia, comprise one or more of:
- three parameters for spatial translation in the three coordinate directions of Cartesian space;
- thee parameters for scaling in these three coordinate directions;
- at least three parameters for orientation of the functions in space;
- at least three parameters for colors with which the contribution of the function affects a view rendered from the representation, in the three additive contributions red, green and blue; and
- optionally additionally velocity vectors for a translation and/or rotation.
- Could also mention surface normals, density, roughness, metallicness; usually a specific model wouldn't use all of these parameters, this is an amalgamation of several common representations

All these parameters reside in the arguments of sine, cosine and exponential functions. This means that the Gaussian function is differentiable with respect to them.

In a further particularly advantageous embodiment, using the three-dimensional representation, and/or a variation of this representation, a synthetic but realistic record of measurement data is generated. This record, such as an image, may then be used in exactly the same manner as a record that has actually been acquired by a sensor. In particular, a variation of the representation may be formed by deliberately editing the representation to have a new semantic content, or to render the existing semantic content in a new manner. A realistic record of measurement data that relates to this new semantic content, or is a new variation on the existing semantic content, may then be obtained by computing a reconstruction.

In particular, in this case, because the change to the semantic content (or the absence of such a change) is known, any ground truth labels with respect to a downstream task that are attached to the scenery may be modified as necessary, or just re-used as it is, for the synthetic but realistic record of measurement data. This facilitates the use of such synthetic but realistic records as training examples for neural networks and other machine learning models.

Therefore, in a further particularly advantageous embodiment, using the synthetic record of measurement data, a machine learning model that computes, from records of measurement data, outputs with respect of a given task is trained. In particular, the machine learning model may be a classifier, such as an image classifier. For example, the machine learning model may classify the scenery as a whole. A decision how to evaluate the scenery in a summary manner, such as with respect to a danger level, or which action a vehicle or robot should perform next in the scenery, may then depend on the classification scores determined with respect to one or more classes. By augmenting the set of training examples with additional synthetically generated examples, the trained machine learning model is empowered to make better decisions even in unusual and rare situations. In another example, the machine learning model may output a semantic segmentation of the scenery, and/or information regarding one or more detected object instances in the scenery.

In a further particularly advantageous embodiment, records of measurement data that have been captured by at least one sensor are provided to the trained machine learning model. An actuation signal is computed from the output delivered by the trained machine learning model. A vehicle, a driving assistance system, a robot, a quality inspection system, a surveillance system, and/or a medical imaging system, is actuated with the actuation signal. In this manner, the probability that the reaction performed by the respective actuated system in response to the actuation signal is appropriate in the situation characterized by the records of measurement data.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

One exemplary embodiment uses driving maps as a prior for 3D Gaussian Splatting, 3DGS, learning. These maps could be standard definition maps (SDMap), high-definition map (HDMap), or any other kind of driving map that is created, edited, or vetted with a human in the loop. For completeness, we note that we will probably have highly reliable driving maps in the near future, thanks to the rapid advancements in Online Map Generation (OMG).

It is non-trivial how to tie between a 3DGS or input data (images/video, Lidar, Radar, IMU, localization, etc.) and driving maps. For this step we propose related prediction models, namely map prediction. Map predictions typically provide the following road elements: lane, center line, barrier, and pedestrian crossing, either in vectorized or rasterized representation. Occupancy prediction typically provides a semantic class to each occupied voxel, including moving objects ("vehicle", "pedestrian", etc.), the most relevant classes for map priors being "road" and "sidewalk".

Once we have corresponding semantics between (noisy) predictions and highly accurate Ground Truth (GT) maps we can utilize the latter as priors, to guide the 3DGS learning. This guidance might take several forms, but the most intuitive is refining the locations of the Gaussians. For example, consider a stop sign, represented as a collection of red and white Gaussian initialized approximately 2.0 meters above the road surface. If the driving map indicates that this sign should be 2.5 meters above the road, then we would expect to see the corresponding losses pulling this collection of Gaussians upwards, towards their correct location.

For completeness we mention that map predictions can be used to enhance 3DGS without map priors, by tracking their consistency across different times and/or viewpoints.

Aligning (registration) a 3DGS model with a driving map allows partitioning the 3DGS into semantically meaningful segments. For example, HDMaps provide localization of lanes, traffic lights, traffic signs, etc. This enables downstream tasks, such as object insertion, e.g. inserting a vehicle model correctly, and editing, e.g. modifying a traffic light state from green to red. Both editing and object insertion would enable driving simulation, offering advanced features beyond novel view synthesis, NVS.

Constructing a 3DGS of a driving sequence typically relies on camera calibration and ego motion, i.e. estimating the vehicle trajectory with localization systems, e.g. IMU and satellite based Global Positioning Systems (GPS). Another method to ensure alignment and stitch sensor inputs over time is ensuring compatibility across time, e.g. matching the overlapping sections of two consecutive Lidar PCDs, e.g. with the Iterative Closest Point (ICP) algorithm. A driving map would provide an additional reference, shared across all time stamps, avoiding the pitfalls of the current methods mentioned above.

During 3DGS learning the solution might reach Gaussian positions that provide good neural rendering compatibility (small loss), but the camera poses might be inaccurate, resulting e.g. in stretching/contraction in the Z axis. Using a map prior should reduce or even eliminate such issues.

On the contrary, even if the 3DGS solution is perfectly accurate, the map assets might suffer from inaccuracies. If we rely on the maps in downstream tasks, such as semantic segmentation and simulation, it might be advantageous to deform the 3DGS, adjusting it to the map's errors (presuming we cannot fix both map and 3DGS without human intervention and/or additional measurements).

The invention can be used at least for the following:
- Increasing the convergence speed of 3DGS learning.
- Improving the rendering details and accuracy of a 3DGS.
- Improve the accuracy of registering/aligning a 3DGS to a map, and hence to a global coordinate system.
- Simulation, using the 3DGS as a static background (roads, buildings, vegetation, etc.), or as a dynamic background (including the vehicles, pedestrians, etc. that were moving during data recording).
- Composite 3DGS simulation, i.e. simulation with additional objects inserted into the background 3DGS, typically represented as smaller 3DGS.
- 3DGS editing, since maps (e.g. HDMaps) provide localization of semantically meaningful elements, such as road markings, traffic signs, etc.
- Al validation, for example Autonomous Driving (AD) systems for perception, motion prediction, motion planning, Advanced Driver Assistance Systems (ADAS), etc.
- Al training, specifically the systems mentioned in the item above, and other AD systems.
- Auto labeling ground truth (GT) for map predictions. This invention could be used in the reverse manner, i.e. learning the 3DGS enhances our ability to register/align sensor data with an SDMap, HDMap, etc. This vetted map could now be used as GT labeling for training a map prediction model.

### Description of the Figures

In the following, the invention is illustrated using Figures without any intention to limit the scope of the invention. The Figures show:
Figure 1 Exemplary embodiment of the method 100 for determining a three-dimensional representation 3 of a scenery 1;
Figure 2 Exemplary way of using ground truth information 7* for refining camera poses.
Figure 3 Exemplary way of using ground truth information 7* for improving reconstructions 5;

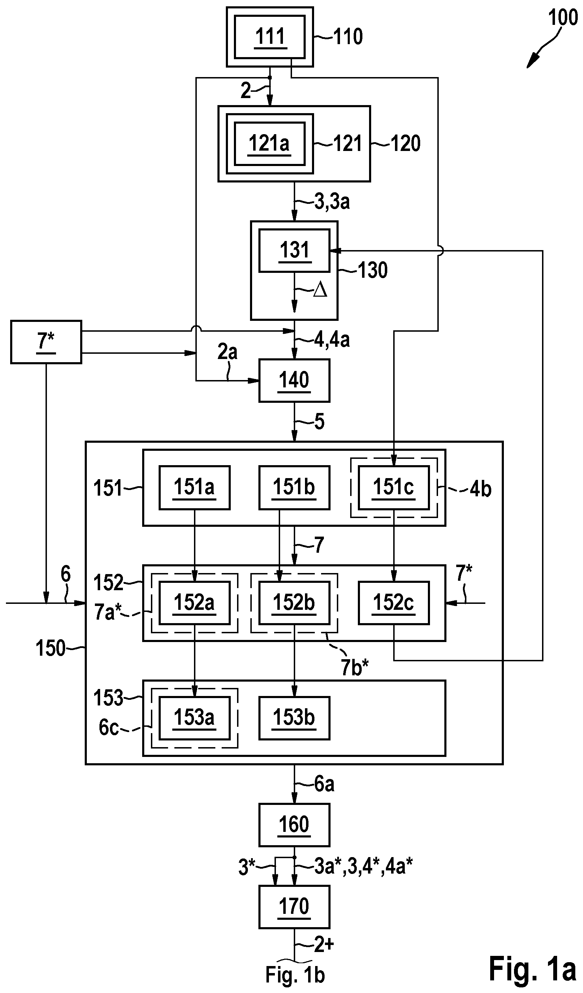

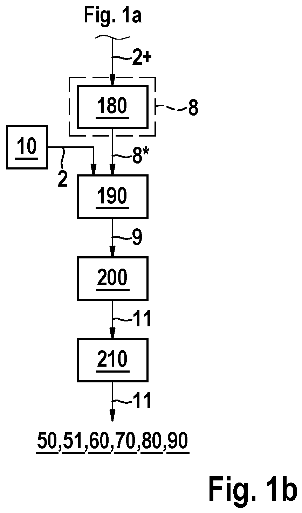

Figure 1 is a schematic flow chart of an embodiment of the method 100 for determining a three-dimensional representation (3) of a scenery 1.

In step 110, a given set of records 2 of measurement data taken of the scenery 1 is provided.

In particular, according to block 111, the given records 2 of measurement data may comprise images taken by one or more cameras.

In step 120, an initial estimate of a set of parameters 3a that characterize the three-dimensional representation 3 is provided.

According to block 121, at least one distribution function that assigns, to each location in three-dimensional space, a probability may be chosen as a function that makes location-dependent contributions to the representation 3. In particular, according to block 121a, at least one probability density function of a Gaussian distribution may be chosen as a distribution function.

In step 130, a model 4 of at least one measurement system with which the given records of measurement data 2 were acquired, is provided. In particular, according to block 131, updates Δ to camera poses 4a in this model 4 may be made as needed.

In step 140, based on the three-dimensional representation 3, reconstructions 5 of records 2 of measurement data are rendered from perspectives corresponding to perspectives 2a from which the given records 2 of measurement data were acquired. That is, by virtue of being nominally views from a same perspective, a reconstruction 5 should match the corresponding given record 2 of measurement data.

In step 150, at least the agreement of the reconstructions 5 with the given records 2 of measurement data is rated by means of a given loss function 6.

In step 160, at least the parameters 3a that characterize the three-dimensional representation 3 are optimized towards the goal of improving the rating 6a by the loss function 6.

The loss function 6, the model 4 of the measurement system, and/or the perspectives 2a from which the given records 2 of measurement data were acquired are determined based at least in part on ground truth information 7* regarding the presence of object instances, and/or occupancy of parts of spaces.

According to block 151, information 7 regarding the presence of object instances, and/or occupancy of parts of spaces, may be computed based at least in part on one or more reconstructions 5. According to block 152, the so-computed information 7 may then be compared to the ground truth information 7*. According to block 153, the loss function 6 may then be dependent on the result of this comparison.

In particular, according to block 151a, information 7 regarding the presence of object instances, and/or occupancy of parts of spaces, may be computed as an actual map based on a reconstruction seen from bird's-eye view. According to block 152a, the ground truth information 7* may then comprise a rasterized ground truth map 7a*. According to block 153a, the loss function 6 may then comprise a contribution from a segmentation loss 6c computed between the actual map and the ground truth map 7a*.

Alternatively or in combination to this, according to block 151b, information 7 regarding the presence of object instances, and/or occupancy of parts of spaces, may be computed as an actual map. According to block 152b, the ground truth information 7* may then comprises a vectorized ground truth map 7b*. According to block 153b, the loss function 6 may then comprise a contribution from a Point2Point loss, and/or an edge direction loss 6d , computed between the actual map and the ground truth map 7b*.

If, according to block 111, the given records 2 of measurement data comprise images taken by one or more cameras, according to block 151c, information 7 regarding the presence of object instances, and/or occupancy of parts of spaces, is computed 151c based on given records 2 of measurement data in combination with information about the respective used camera. For example, such information may comprise camera calibration information 4b. According to block 152c, this information may be compared to the ground truth information 7. According to block 131, based on the result of this comparison, an update Δ to camera poses 4a in the model 4 of the measurement system may then be calculated.

In the example shown in Figure 1, in step 170, using the three-dimensional representation 3, and/or a variation 3* of this representation, a synthetic but realistic record 2+ of measurement data is generated.

In step 180, using the synthetic record 2+ of measurement data, a machine learning model 8 that computes, from records 2 of measurement data, outputs 9 with respect of a given task is trained.

In step 190, records 2 of measurement data that have been captured by at least one sensor 10 are provided to the trained machine learning model 8*.

In step 200, an actuation signal 11 is computed 200 from the output 9 delivered by the trained machine learning model 8*.

In step 210, a vehicle 50, a driving assistance system 51, a robot 60, a quality inspection system 70, a surveillance system 80, and/or a medical imaging system 90, is actuated with the actuation signal 11.

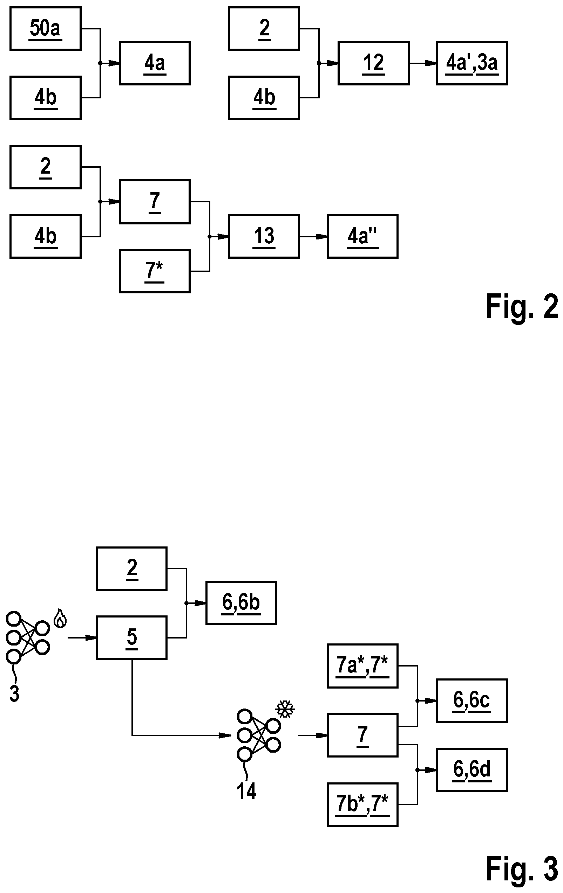

Figure 2 shows how camera poses 4a may be refined using ground truth information 7*.

In the example shown in Figure 2, a first version of the camera poses 4a is computed based on vehicle poses 50a (that may, for example, be computed from odometry and other means of localization) in combination with camera calibration parameters 4b. By combining records 2 of measurement data, here: images, with the camera calibration parameters 4b, using a structure from motion algorithm 12, a refined version 4a' of the camera poses 4a is obtained, together with initial values of the parameters 3a that characterize the three-dimensional representation (here: parameters for Gaussian basis functions).

The combination of the records 2 of measurement data and the camera calibration parameters 4b is further used to compute a map prediction as information 7 regarding the presence of object instances, and/or occupancy of parts of spaces. This information 7 is compared to corresponding ground truth map information 7 using a registration algorithm 13. From the result, a further refined version 4a" of the camera poses is obtained.

Figure 3 illustrates how the ground truth information 7* may be used to improve reconstructions 5.

In the example shown in Figure 3, reconstructions 5 are rendered using a three-dimensional representation 3. These reconstructions 5 are compared to given records 2 of measurement data, here: real images. The result of this comparison forms a consistency loss contribution 6b to the loss function 6.

Apart from the consistency loss contribution 6b, the loss function 6 may, for example, comprise one or more of the following contributions:
- a smoothness loss (in particular in terms of the aggregated density),
- a surface normals loss computed from the reconstructions 5 alone; and
- a semantic segmentation loss computed from the reconstructions 5 in combination with ground truth information.

From the reconstructions 5, using a (possibly frozen) trained machine learning model 14, a map prediction is computed as information 7 regarding the presence of object instances, and/or occupancy of parts of spaces. This map prediction can be compared to the ground truth information 7* in different ways.

If the ground truth information 7* comprises a rasterized map 7a*, this may be compared to the map prediction 7 using a bird's-eye view segmentation loss contribution 6c to the total loss function 6.

If the ground truth information 7* comprises a vectorized map 7b*, this may be compared to the map prediction 7 using a Point2Point loss, and/or edge detection loss, contribution 6d to the total loss function 6.

The driving map may, for example, comprise one or more of the following kinds of information:
- roads as a backbone of the scenery 1;
- lane borders and types, optionally including lane switching rules;
- traffic signs, such as stop signs, yield signs, speed limits, etc.;
- stop lines; and
- traffic lights.

In particular, the driving map may relate to a static part of the semantic content of the scenery 1. Dynamic and/or moving objects, such as vehicles or pedestrians, are usually defined by bounding boxes that come on top of the driving map.

## Claims

1. A method (100) for determining a three-dimensional representation (3) of a scenery (1), the method (100) comprising the steps of:
• providing (110) a given set of records (2) of measurement data taken of the scenery (1);
• providing (120) an initial estimate of a set of parameters (3a) that characterize the three-dimensional representation (3);
• providing (130) a model (4) of at least one measurement system with which the given records of measurement data (2) were acquired;
• rendering (140), based on the three-dimensional representation (3), reconstructions (5) of records (2) of measurement data from perspectives corresponding to perspectives (2a) from which the given records (2) of measurement data were acquired;
• rating (150) at least the agreement of the reconstructions (5) with the given records (2) of measurement data by means of a given loss function (6); and
• optimizing (160) at least the parameters (3a) that characterize the three-dimensional representation (3) towards the goal of improving the rating (6a) by the loss function (6),
wherein the loss function (6), the model (4) of the measurement system, and/or the perspectives (2a) from which the given records (2) of measurement data were acquired are determined based at least in part on ground truth information (7*) regarding the presence of object instances, and/or occupancy of parts of spaces.

2. The method (100) of claim 1, wherein:
• information (7) regarding the presence of object instances, and/or occupancy of parts of spaces, is computed (151) based at least in part on one or more reconstructions (5);
• the so-computed information (7) is compared (152) to the ground truth information (7*); and
• the loss function (6) is dependent (153) on the result of this comparison.

3. The method (100) of any one of claims 1 to 2, wherein the scenery (1) comprises a traffic situation, and the ground truth information (7*) comprises a map of roads or other pathways along which traffic participants may move.

4. The method (100) of claims 2 and 3, wherein:
• the ground truth information (7*) comprises (152a) a rasterized ground truth map (7a*);
• information (7) regarding the presence of object instances, and/or occupancy of parts of spaces, is computed (151a) as an actual map based on a reconstruction seen from bird's-eye view; and
• the loss function (6) comprises (153a) a contribution from a segmentation loss (6c) computed between the actual map and the ground truth map (7a*).

5. The method (100) of claims 2 and 3, and optionally claim 4, wherein:
• the ground truth information (7*) comprises (152b) a vectorized ground truth map (7b*),
• information (7) regarding the presence of object instances, and/or occupancy of parts of spaces, is computed (151b) as an actual map; and
• the loss function (6) comprises (153b) a contribution from a Point2Point loss, and/or an edge direction loss (6d), computed between the actual map and the ground truth map (7b*).

6. The method (100) of any one of claims 1 to 5, wherein the given records (2) of measurement data comprise (111) images taken by one or more cameras.

7. The method (100) of claim 6, wherein:
• information (7) regarding the presence of object instances, and/or occupancy of parts of spaces, is computed (151c) based on given records (2) of measurement data in combination with information about the respective used camera;
• this information is compared (152c) to the ground truth information (7); and
• based on the result of this comparison, an update (Δ) to camera poses (4a) in the model (4) of the measurement system is calculated (131).

8. The method (100) of any one of claims 1 to 7, wherein at least one distribution function that assigns, to each location in three-dimensional space, a probability is chosen (121) as a function that makes location-dependent contributions to the representation (3).

9. The method (100) of claim 8, wherein at least one probability density function of a Gaussian distribution is chosen (121a) as a distribution function.

10. The method (100) of any one of claims 1 to 9, wherein, using the three-dimensional representation (3), and/or a variation (3*) of this representation, a synthetic but realistic record (2+) of measurement data is generated (170).

11. The method (100) of claim 10, wherein, using the synthetic record (2+) of measurement data, a machine learning model (8) is trained (180) that computes, from records (2) of measurement data, outputs (9) with respect of a given task.

12. The method (100) of claim 11, wherein
• records (2) of measurement data that have been captured by at least one sensor (10) are provided (190) to the trained machine learning model (8*);
• an actuation signal (11) is computed (200) from the output (9) delivered by the trained machine learning model (8*); and
• a vehicle (50), a driving assistance system (51), a robot (60), a quality inspection system (70), a surveillance system (80), and/or a medical imaging system (90), is actuated (210) with the actuation signal (11).

13. A computer program, comprising machine-readable instructions that, when executed by one or more computers and/or compute instances, cause the one or more computer and/or compute instances to perform the method (100) of any one of claims 1 to 12.

14. A machine-readable data carrier and/or a download product with the computer program of claim 13.

15. One or more computers and/or compute instances with the computer program of claim 13, and/or with the machine-readable data carrier and/or download product of claim 14.
